# EUROPÄISCHE PATENTSCHRIFT

(11) **EP 0 677 071 B1**
(45) Veröffentlichungstag und Bekanntmachung des Hinweises auf die Patenterteilung: **16.07.1997**
(21) Anmeldenummer: 94902619.9
(22) Anmeldetag: 20.12.1993
(51) Int. Cl.: C08G 14/08, C08L 97/02

(54) **VERFAHREN ZUR HERSTELLUNG HOCHREAKTIVER HARNSTOFF-MODIFIZIERTER PHENOALHARZE ALS BINDEMITTEL FÜR MITTELLANGENSPÄNE BEI DER HERSTELLUNG VON SPANPLATTEN**
METHOD OF PRODUCING HIGHLY REACTIVE UREA-MODIFIED PHENOLIC RESINS FOR USE AS CORE-CHIP BINDERS IN THE MANUFACTURE OF CHIPBOARDS
PROCEDE DE FABRICATION DE RESINES PHENOLIQUES TRES REACTIVES ET MODIFIEES PAR L'UREE COMME LIANTS POUR LES PARTICULES DES COUCHES CENTRALES DANS LA FABRICATION DE PANNEAUX DE PARTICULES

(30) Priorität: 02.01.1993 DE 4300035
(43) Veröffentlichungstag der Anmeldung: 18.10.1995
(73) Patentinhaber: RWE-DEA Aktiengesellschaft für Mineraloel und Chemie, 22204 Hamburg (DE)
(72) Erfinder: BUSCHFELD, Adolf, D-46519 Alpen (DE); LATTEKAMP, Matthias, D-46519 Alpen (DE); GRAMSE, Manfred, D-47445 Moers (DE); KREZMIN, Hans-Jürgen, D-47445 Moers (DE)
(74) Vertreter: Schupfner, Gerhard D.
(86) Internationale Anmeldenummer: DE9301236
(87) Internationale Veröffentlichungsnummer: WO9415982

(56) Entgegenhaltungen:
- EP-A- 0 028 382
- EP-A- 0 146 881
- DD-A- 157 909
- FR-A- 1 189 899

## Beschreibung

Phenolharze werden seit langem in der Holzwerkstoffindustrie für die Herstellung bedingt witterungsbeständiger Spanplatten (Qualität V 100, DIN 68763) eingesetzt. Es handelt sich hierbei um wäßrige, alkalisch härtende Phenolformaldehydkondensate, hergestellt durch Umsetzung von Phenol und Formaldehyd in Gegenwart von Alkalien im Molverhältnis von Phenol zu Formaldehyd von 1 : 1,5 bis 3,5, bevorzugt 1: 2 bis 2,7, deren Qualität im wesentlichen durch den Feststoffgehalt, die Viskosität und den Alkaligehalt festgelegt ist.

Je höhermolekular diese Harze sind, desto größer ist ihre Bindefestigkeit und um so kürzer ist ihre Härtezeit und damit auch die erforderliche Preßzeit der Spanplatten. Die Molekülgröße bzw. der Kondensationsgrad ist bei vorgegebenen Feststoff- und Alkaligehalten in starkem Maße von der Viskosität der Harzlösung abhängig, der bei der Verarbeitung der Harze jedoch hinsichtlich ihrer Höhe Grenzen gesetzt sind.

Um die Hygroskopizität phenolharzgebundener Spanplatten zu vermindern und damit Folgeschäden durch Feuchteeinwirkung auszuschließen, wird in den letzten Jahren verstärkt versucht, die Alkalibelastung der Spanplatte durch Reduzierung der Alkaligehalte der Harze zu senken. So ist man bei der Herstellung von Spanplatten in den vergangenen Jahren von den stark alkalischen, etwa 10 bis 12 % Natriumhydroxid enthaltenden 45 bis 48 %igen Phenolharzen zu alkaliärmeren Harzen mit 5 bis 8 % NaOH übergegangen, die aber einen naturgemäß niedrigeren Kondensationsgrad haben und infolge starken Verschlagens in die Holzfaser zu verminderter Bindefetigkeit und aufgrund der schwächeren Reaktivität zu längeren Preßzeiten führen.

In der DE-PS 29 44 178 werden Phenolharze beschrieben, in denen der hohe Kondensationsgrad alkalireicher Bindemittel durch Senkung des Feststoffgehaltes mittels Wasser auf 30 bis 41 % bei gleicher Viskosität erhalten bleibt. Diese Harze beeinflusen jedoch durch ihre niedrigen Feststoffgehalte den Wasserhaushalt der Spanplatte. Die Späne müssen entweder stärker als üblich zurückgetrocknet, oder die Preßzeiten müssen zum Ausdampfen des Wassers aus der Platte verlängert werden. Diese Harze eignen sich daher - wenn überhaupt - nur zur Anwendung in der Deckschicht von Spanplatten.

In der europäischen Patentanmeldung EP 0 146 881 werden hohe Kondensationsgrade der Phenolharze dadurch erzielt, daß Phenolformaldehydharzen mit einer Viskosität von mehr als 300 bis 20.000 mPa.s (bei 20 °C), bevorzugt bis zu 10.000 mPa.s, vor bzw. nach dem Abkühlen 2 bis 30 Gew.% Harnstoff, bezogen auf die Phenolharzlösung, zugesetzt werden, wodurch die Viskosität auf eine Verarbeitungsviskosität von max. 1.000 mPa.s reduziert wird. Hinsichtlich der Feststoff- und Alkaligehalte wird die Reaktion der Phenolformaldehydharze so gesteuert, daß die Feststoffgehalte der harnstoff-modifizierten Harze zwischen 30 bis 65 % liegen und die Alkaligehalte 2 bis 12 Gew.% Alkali, berechnet als NaOH, betragen.

Die nach dem Verfahren der EP 84 115 270.5 hergestellten, zur Beleimung der Deckschichtspäne geeigneten Phenolharze, deren Alkaligehalte zwischen 2 und 6 % liegen können, haben inzwischen eine große wirtschaftliche Bedeutung in der Spanplattenfertigung erlangt, da sie sich durch hohe Bindefestigkeit und Formaldehydfreiheit auszeichnen und zudem gegenüber herkömmlichen unmodifizierten Decklagenphenolharzen preiswürdiger sind.

Für die Beleimung der Mittelschichtspäne sind Harze nach dem Verfahren der EP 0 146 881 mit 2 bis 6 Gew.% Alkali als Bindemittel nicht geeignet, da die Alkalität der Harze zu gering ist, um bei den heute üblichen kurzen Preßzeiten und bei den in den Mittellagen der Spanplatten während der Verpreßung auftretenden Temperaturen von nur 100 bis 110 °C schnell genug aushärten zu können.

Die nach dem Verfahren der EP 84 115 270.5 herstellbaren modifizierten Phenolharze mit 6 bis 12 % Alkali haben zwar gegenüber den herkömmlichen Mittellagenphenolharzen einen höheren Kondensationsgrad, der sich jedoch nicht entscheidend in einer Preßzeitverkürzung bei ausreichender Bindefestigkeit äußert, da infolge erhöhter Alkalität und der damit einhergehenden verstärkten Cannizzaro-Reaktion Methylolgruppen bzw. Formaldehyd in Methanol und Formiat umgesetzt werden und somit für die Spanbindung verlorengehen. Hinzukommt, daß diese hochalkalischen Harze bei der Lagerung und vor allem bei der Verpressung Ammoniak freisetzen können und damit zu einer Geruchsbelästigung und Umweltbelastung führen.

Um zu einer merklichen Preßzeitverkürzung gegenüber dem heutigen Stand der Technik zu kommen, reichen die nach EP 84 115 270.5 hergestellten Mittellagenharze hinsichtlich der erzielbaren Reaktivitäten nicht aus.

Aufgabe dieser Erfindung ist es, der Spanplattenindustrie Mittellagenphenolharze in die Hand zu geben, die die geschilderten Nachteile nicht aufweisen und zu Preßzeiten führen, die gleich oder sogar noch kürzer sind als die Preßzeiten, die mit den sauer härtenden Aminoharzen erreicht werden. Dieses Ziel bedeutet sowohl Energieeinsparung als auch Erweiterung der Anlagenkapazität.

Diese Aufgabe wird erfindungsgemäß dadurch gelöst, daß Phenol und Formalin unter alkalischen Bedingungen soweit kondensiert werden, daß nach Zusatz von 30 bis 50 Gew.% Harnstoff, bezogen auf das Phenol-Formaldehyd-Kondensationsprodukt, modifizierte Phenolharze resultieren, die einen Feststoffgehalt von 50 bis 70 %, bevorzugt 55 bis 65 %, Alkaligehalte von 2 bis 8 Gew.%, vorzugsweise 4 bis 7 Gew.% (berechnet als NaOH) und Viskositäten von max. 5000 mPa.s/20 °C, bevorzugt 100 bis 1.500 mPa.s/20 °C, insbesondere 200 bis 1000 mPa.s/20 °C haben und daß diesen hochreaktiven harnstoff-modifizierten, relativ alkaliarmen Phenolharzen vor ihrer Verarbeitung zur Gewährleistung einer ausreichend schnellen Vernetzung des Phenolharzes auf dem Span soviel Alkalilauge zugesetzt wird, daß ein Gesamtalkaligehalt der Harzlösung von 7 bis 13 Gew.%, bevorzugt 8 bis 12 Gew.% (berechnet als NaOH), resultiert.

Gemäß dem erfindungsgemäßen Verfahren werden die Phenolformaldehydharze bis kurz vor ihrer Gelierung kondensiert, und zwar bevorzugt auf eine Viskosität von mehr als 3000 mPa.s/20 °C, und insbesondere auf eine Viskosität von 5000 bis zu 300.000 mPa.s/20 °C. Sodann wird den erhaltenen hochviskosen Phenolharzlösungen Harnstoff zugegeben, ggf. gelagert und das harnstoff-modifizierte Harz erst vor der Verarbeitung mit der zusätzlichen, zur Gewährleistung einer ausreichend schnellen Vernetzung des Phenolharzes auf dem Span erforderlichen Menge Alkali versetzt.

Ein wesentliches Merkmal der Erfindung besteht in der Bereitstellung relativ alkaliarmer (2 bis 8 % Alkali) Mittellagenphenolharze, denen vor der Verarbeitung bei der Leimflottenzubereitung soviel Alkali zugesetzt wird, daß ein Gesamtalkaligehalt von 7 bis 13 %, bevorzugt 8 bis 12 %, resultiert, der eine ausreichend schnelle Härtung des Phenolharzes gewährleistet. Diese Maßnahme führt infolge der auftretenden Reaktionswärme zur Erwärmung der Leimflotte - die in Abhängigkeit von der Alkali-Zugabemenge bis zu 20 °C betragen kann - und damit vorteilhaft auch zu einer Viskositätserniedrigung der Leimflotte, die wiederum zu einer besseren Leimverteilung im Spanmaterial und damit zu verbesserten Festigkeitseigenschaften führt.

Des weiteren bleibt durch den nachträglichen Zusatz der Lauge die hohe Reaktivität der alkaliarmen Harze erhalten, da durch die niedrige Temperatur und die kurze Einwirkungszeit die Bildung von Formiat und Methanol weitestgehend unterdrückt ist.

Ein weiterer Vorteil dieser Verfahrensvariante ist, daß im Gegensatz zum Einsatz alkalireicher harnstoff-modifizierter Harze kein Ammoniak freigesetzt wird.

Darüber hinaus hat der Verarbeiter, d.h. der Spanplattenhersteller, die Möglichkeit, der Acidität des jeweils vorliegenden Holzspanguts die Natronlaugedosierung anzupassen, um qualitätskonstantes Quellverhalten der Spanplattenproduktion sicherzustellen.

Die erfindungsgemäß erhaltenen Mittellagenharze können wie die heute üblicherweise eingesetzten Phenolharze mit Härtern und dergleichen zu Leimflotten verarbeitet werden, die anschließend auf den Mittelschichtspan aufgebracht werden.

Die erfindungsgemäße Herstellung und Verarbeitung wird in den folgenden Beispielen erläutert. Die überlegene Qualität der neuartigen, schnell abbindenden Mittellagenphenolharze hinsichtlich kürzerer Preßzeit ist aus den Beispielen ersichtlich.

Die Viskositäten wurden in der Regel jeweils bei 20 °C gemessen. Zur Bestimmung des Feststoffgehaltes wurde 1 g Substanz 2 Stunden im Umluftofen bei 120 °C getrocknet.

### Beispiel 1 (erfindungsgemäß)

941 Gewichtsteile Phenol (10 Mol) und 232 Gewichtsteile 50 %iger Natronlauge wurden in einem Kolben auf 90 °C aufgeheizt. Innerhalb von 80 Min. wurden 1.950 Gewichtsteile Formalin 40 %ig (26 Mol) zugegeben, daran anschließend 232 Gewichtsteile 50 %ige Natronlauge in 15 Min. Es wurde 30 min bei 85 °C kondensiert, dann die Temperatur innerhalb von 60 min auf 65 °C gesenkt und bei einer Viskosität von 90.000 mPa.s/20 °C (Formaldehydgehalt 4,2 %) 1.357 Gewichtsteile Harnstoff (40,7 %, bezogen auf Phenolharzlösung) zugegeben.

Das Harz hatte folgende Kenndaten:

| | | |
|---|---|---|
| Feststoffgehalt | % | 58,9 |
| Viskosität b. 20 °C | mPa.s | 620 |
| Gelierzeit b. 100 °C | min | 14 |
| Alkaligehalt (theoretisch, berechnet als NaOH) | % | 4,9 |
| Formaldehydgehalt | % | 0,3 |

Vor der Verarbeitung wurden diesem Harz 11 Gew.-Teile Natronlauge 50 %ig, bezogen auf 100 Gew.-Teile Harzlösung, zugesetzt. Diese Zugabemenge führt zu einem Gesamtalkaligehalt von 9,4 Gew.%, berechnet als NaOH. Die Leimflottentemperatur erhöhte sich hierbei von 20 °C auf 33 °C. Die Viskosität fiel auf 320 mPa.s, gemessen bei dieser Temperatur.

### Beispiel 2 (Vergleichsbeispiel)

Es wurde ein herkömmliches marktübliches Mittellagenphenolharz eingesetzt.
505 Gewichtsteile Phenol (5,37 Mol) und 218 Gewichtsteile Natronlauge 50 %ig wurden in einem Kolben auf 80 °C erhitzt. Innerhalb von 1 h wurden 1.104 Gewichtsteile Formalin 38 %ig (14 Mol) unter Beibehaltung der Temperatur zugegeben. Bei Erreichen von 900 mPa.s wurde die Temperatur auf 70 °C gesenkt. Bei 1.700 mPa.s wurden 169 Gewichtsteile Natronlauge 50 %ig zudosiert, und der Ansatz wurde abgekühlt.

Das Harz hatte folgende Kennzahlen:

| | | |
|---|---|---|
| Feststoffgehalt | % | 48,1 |
| Viskosität b. 20 °C | mPa.s | 750 |
| Gelierzeit b. 100 °C | min | 30 |
| Formaldehydgehalt | % | 0,3 |
| Alkaligehalt (theoretisch, berechnet als NaOH) | % | 9,7 |

### Beispiel 3 (Vergleichsbeispiel)

Dieses Beispiel entspricht dem Verfahren gemäß EP 0 146 881.
941 Gewichtsteile Phenol (10 Mol) und 236 Gewichtsteile 50 %iger Natronlauge wurden in einem Kolben auf 90 °C aufgeheizt. Innerhalb von 80 Min. wurden unter Beibehaltung der Temperatur 1.960 Gewichtsteile Formalin 40 %ig (26 Mol) zugegeben, daran anschließend 212 Gewichtsteile 50 %ige Natronlauge. Es wurde bis zu einer Viskosität von 1.320 mPa.s kondensiert und innerhalb 15 Min. 440 Gewichtsteile 50 %ige NaOH zugegeben. Die Reaktion wurde nach Erreichen einer Viskosität von 7.200 mPa.s/20 °C (0,6 % Formaldehydgehalt) dadurch abgebrochen, daß 940 Gewichtsteile Harnstoff (24,8 %, bezogen auf Phenolharzlösung) zuchargiert wurden.

Das Harz hatte folgende Kenndaten:

| | | |
|---|---|---|
| Feststoffgehalt | % | 53,5 |
| Viskosität b. 20 °C | mPa.s | 690 |
| Gelierzeit b. 100 °C | min | 31 |
| Formaldehydgehalt | % | 0,3 |
| Alkaligehalt (theoretisch, berechnet als NaOH) | % | 9,4 |

### Beispiel 4 (Vergleichsbeispiel)

Dieser Versuch, der in der Zusammensetzung identisch mit Beispiel 1 ist, zeigt den Einfluß einer vorzeitigen Laugenzugabe.
941 Gewichtsteile Phenol (10 Mol) und 232 Gewichtsteile Natronlauge 50 %ig wurden in einem Kolben auf 90 °C erhitzt. Innerhalb von 80 Min. wurden 1.950 Gewichtsteile Formalin 40 %ig (26 Mol) unter Beibehaltung der Temperatur zugegeben, daran anschließend 232 Gewichtsteile 50 %ige Natronlauge in 15 Min. Es wurde 20 min bei 85 °C kondensiert, dann 518 Gewichtsteile 50 %ige Natronlauge in 15 Min. zugegeben. Bei Erreichen von 900 mPa.s wurde die Temperatur auf 70 °C gesenkt. Bei 5.900 mPa.s/20 °C (Formaldehydgehalt 0,8 %) wurden 1.357 Gewichtsteile Harnstoff (35,0 % bezogen auf Phenolharzlösung) zugegeben.

Das Harz hatte folgende Kenndaten:

| | | |
|---|---|---|
| Feststoffgehalt | % | 56,6 |
| Viskosität b. 20 °C | mPa.s | 630 |
| Gelierzeit b. 100 °C | min | 34 |
| Formaldehydgehalt | % | 0,4 |
| Alkaligehalt (theoretisch, ber. als NaOH) | % | 9,4 |

Bereits nach 1-tägiger Lagerung bei Raumtemperatur wies das Harz einen deutlichen Ammoniakgeruch auf.

### Anwendung der Mittellagenharze in Spanplatten

Die qualitativen Untersuchungen der erfindungsgemäß hochreaktiven modifizierten Phenolharze wurden an dreischichtigen, 19 mm starken Spanplatten durchgeführt, deren Deckschichtspan/Mittelschichtspan-Verhältnis 35 : 65 betrug. Die Beleimungsmenge der Deckschichtspäne betrug in allen Fällen 8 % Festharz, die der Mittelschichtspäne 7 % Festharz, bezogen auf atro (absolut trockenen) Span.

Zur Härtungsbeschleunigung wurden den Mittellagenharzen 8 Gew.% Kaliumcarbonatlösung (50 %ig), bezogen auf Harzlösung, zugegeben.

Zur Hydrophobierung der Späne wurde den Phenolharzen 1 % Paraffin, bezogen auf atro Span, in Form einer 50 Gew.%igen Paraffinemulsion zugesetzt.

Zur Beleimung der Deckschichtspäne wurde ein marktübliches 45 %iges modifiziertes Phenolharz verwendet, wie es in der EP 84 115 270.5 beschrieben ist.

### Vergleich der Spanplatteneigenschaften

| | erfindungsgemäß | | Vergleichsbeispiele | | |
|---|---|---|---|---|---|
| Beispiel | | 1 | 2 | 3 | 4 |
| Preßfaktor | min/mm | 0,105 | 0,150 | 0,140 | 0,125 |
| Biegefestigkeit | N/mm² | 18,8 | 18,2 | 18,4 | 18,4 |
| Querzugfestigkeit (V 20) | N/mm² | 0,47 | 0,45 | 0,43 | 0,41 |
| Querzugfestgikeit (V 100) | N/mm² | 0,17 | 0,16 | 0,16 | 0,16 |

Alle Prüfungen erfolgten nach DIN 68 763.

Aus der Tabelle geht klar hervor, daß mit dem erfindungsgemäßen Harz aus Beispiel 1 gegenüber den bekannten Harzen (Vergleichsbeispiele 2 und 3) wie auch gegenüber Vergleichsbeispiel 4 vergleichbare Festigkeiten bei einer erheblich verkürzten Preßzeit erzielt werden.

## Patentansprüche

1. Verfahren zur Herstellung harnstoff-modifizierter Phenolharze als Bindemittel für Mittellagenspäne bei der Herstellung von Spanplatten,
**dadurch gekennzeichnet**, daß Phenol und Formalin unter alkalischen Bedingungen soweit kondensiert werden, daß nach Zusatz von 30 bis 50 Gew.% Harnstoff, bezogen auf das Phenol-Formaldehyd-Kondensationsprodukt, modifizierte Phenolharze resultieren, die einen Feststoffgehalt von 50 bis 70 %, Alkaligehalte von 2 bis 8 Gew.% (berechnet als NaOH) und Viskositäten von max. 5.000 mPa.s/20 °C haben und
daß diesen harnstoff-modifizierten,
relativ alkaliarmen Phenolharzen vor ihrer Verarbeitung zur Gewährleistung einer ausreichend schnellen Vernetzung des Phenol-harzes auf dem Span soviel Alkalilauge zugesetzt wird, daß ein Gesamtalkaligehalt der Harzlösung von 7 bis 13 Gew.% (berechnet als NaOH) resultiert.

2. Verfahren nach Anspruch 1,
**dadurch gekennzeichnet**, daß vor der Harnstoffzugabe Phenol und Formaldehyd unter alkalischen Bedingungen auf eine Viskosität von mehr als 3.000 mPa.s/20 °C kondensiert werden.

3. Verfahren nach Anspruch 2,
**dadurch gekennzeichnet**, daß Phenol und Formalin unter alkalischen Bedingungen auf eine Viskosität von 5.000 bis zu 300.000 mPa.s/20 °C kondensiert werden.

4. Verfahren nach einem der vorhergehenden Ansprüche, daß nach Zusatz des Harnstoffs modifizierte Phenolharze resultieren, die einen Feststoffgehalt von 55 bis 65 % haben.

5. Verfahren nach einem der vorhergehenden Ansprüche, **dadurch gekennzeichnet**, daß nach der Harnstoffzugabe modifzierte Phenolharze resultieren, die einen Alkaligehalt von 4 bis 7 Gew.% haben.

6. Verfahren nach einem der vorhergehenden Ansprüche, daß nach Harnstoffzugabe modifizierte Phenolharze resultieren, die eine Viskosität von 100 bis 1.500 mPa.s/20 °C haben.

7. Verfahren nach Anspruch 6,
**dadurch gekennzeichnet**, daß nach Harnstoffzugabe modifizierte Phenolharze resultieren, die eine Viskosität von 200 bis 1.000 mPa.s/20 °C haben.

8. Verfahren nach einem der vorhergehenden Ansprüche,
**dadurch gekennzeichnet**, daß den harnstoff-modifizierten Phenolharzen vor ihrer Verarbeitung soviel Alkalilauge zugesetzt wird, daß ein Gesamtalkaligehalt der Harzlösung von 8 bis 12 Gew.% (berechnet als NaOH) resultiert.

## Claims

1. A process for producing urea-modified phenolic resins as bonding agents for center-layer particles in the manufacture of particleboard,
**characterised in that**
phenol and formaldehyde are condensed under alkaline conditions such that, after addition of 30 to 50 wt.% of urea, referring to the phenol-formaldehyde condensation product, modified phenolic resins are obtained having a solid content of 50 to 70 % and alkali content of 2 to 8 wt.% (calculated as NaOH) and viscosities of max. 5,000 mPa·s at 20 °C, and,
that prior to processing, a sufficient amount of an alkaline solution is added to said urea-modified, relatively low-alkaline phenolic resins in order to ensure a total alkali content of 7 to 13 wt.% (calculated as NaOH) in the resin solution, thus achieving sufficiently rapid cross-linking of the phenolic resin on the particle.

2. The process according to claim 1, characterised in that, prior to the addition of urea, the condensation of phenol and formaldehyde under alkaline conditions is carried on until a viscosity of more than 3,000 mPa·s at 20 °C is reached.

3. The process according to claim 2, characterised in that the condensation of phenol and formaldehyde under alkaline conditions is carried on until a viscosity of 5,000 to 300,000 mPa·s at 20 °C is reached.

4. A process according to any one of the preceding claims, characterised in that, after the addition of urea, modified phenolic resins are obtained therefrom having 55 to 65 % solid content.

5. A process according to any one of the preceding claims, characterised in that, after the addition of urea, the modified phenolic resins are obtained therefrom having an alkali content of 4 to 7 wt.%.

6. A process according to any one of the preceding claims, characterised in that, after the addition of urea, modified phenolic resins are obtained therefrom having viscosities of from 100 to 1,500 mPa·s at 20 °C.

7. A process according to claim 6, characterised in that, after the addition of urea, modified phenolic resins are obtained therefrom having viscosities of from 200 to 1,000 mPa·s at 20 °C.

8. A process according to any one of the preceding claims, characterised in that, prior to processing, a sufficient amount of alkaline solution is added to the urea-modified phenolic resins in order to attain a total alkali content of 8 to 12 wt.% (calculated as NaOH) in the resultant resin solution.

## Revendications

1. Procédé de préparation de résines phénoliques modifiées par l'urée comme liant pour les copeaux de couche centrale dans la fabrication de panneaux de copeaux agglomérés, caractérisé en ce que le phénol et la formaline sont condensés dans des conditions alcalines, jusqu'à ce qu'on obtienne, après addition de 30 à 50% en poids d'urée par rapport au produit de la condensation du phénol et du formaldéhyde, des résines phénoliques modifiées, possédant une teneur en matières solides de 50 à 70%, une teneur en alcalis (évalués comme NaOH) de 2 à 8% en poids et une viscosité maximale de 5000 mPa.s/20°C, et en ce que l'on ajoute à ces résines phénoliques modifiées par l'urée, relativement pauvres en alcalis, avant leur mise en oeuvre, suffisamment de lessive alcaline afin de garantir une réticulation assez rapide de la résine phénolique sur le copeau, de sorte qu'il en résulte une teneur totale en alcalis de la solution de 7 à 13 % en poids (évalués comme NaOH).

2. Procédé suivant la revendication 1, caractérisé en ce que le phénol et le formaldéhyde sont condensés dans des conditions alcalines, avant l'addition d'urée, jusqu'à une viscosité de plus de 3000 mPa.s/20°C.

3. Procédé suivant la revendication 2, caractérisé en ce que le phénol et la formaline sont condensés dans des conditions alcalines jusqu'à une viscosité de 5000 à 300 000 mPa.s/20°C.

4. Procédé suivant l'une quelconque des revendications précédentes, caractérisé en ce que après addition de l'urée, il résulte des résines phénoliques modifiées, qui possèdent une teneur en matières solides de 55 à 65%.

5. Procédé suivant l'une quelconque des revendications précédentes, caractérisé en ce que après addition de l'urée , il résulte des résines phénoliques modifiées, qui possèdent une teneur en alcalis de 4 à 7% en poids.

6. Procédé suivant l'une quelconque des revendications précédentes, caractérisé en ce que après addition de l'urée, il résulte des résines phénoliques modifiées, qui possèdent une viscosité de 100 à 1500 mPa·s/20°C.

7. Procédé suivant la revendication 6, caractérisé en ce que après addition de l'urée, il résulte des résines phénoliques modifiées, qui possèdent une viscosité de 200 à 1.000 mPa.s/20°C.

8. Procédé suivant l'une quelconque des revendications précédentes, caractérisé en ce que l'on ajoute aux résines phénoliques modifiées par l'urée avant leur mise en oeuvre, suffisamment de lessive alcaline de sorte qu'il en résulte une teneur totale en alcalis de la solution de résine de 8 à 12% en poids (évalués comme NaOH).
